# EUROPEAN PATENT SPECIFICATION

(11) **EP 2 320 753 B1**
(45) Date of publication and mention of the grant of the patent: **21.12.2011**
(21) Application number: 09811112.3
(22) Date of filing: 01.09.2009
(51) Int. Cl.: A23L 1/0526, A23L 1/304, A23L 2/02, A23L 2/52

(54) **BEVERAGES COMPRISING POTASSIUM**
GETRÄNKE, DIE KALIUM ENTHALTEN
BOISSONS COMPRENANT DU POTASSIUM

(30) Priority: 05.09.2008 EP 08163760
(43) Date of publication of application: 18.05.2011
(73) Proprietor: Unilever N.V., 3013 AL Rotterdam (NL); Unilever PLC, London Greater London EC4Y 0DY (GB)
(72) Inventor: DEUTZ, Inge Elisabeth Maria, NL-3133 AT Vlaardingen (NL); HEENEY, Luke Oliver, Bedford Bedfordshire MK44 1LQ (GB)
(74) Representative: Corsten, Michael Allan
(86) International application number: PCT/EP2009/061272
(87) International publication number: WO 2010/026136

(56) References cited:
- WO-A-95/21542
- WO-A-2004/068957
- JP-A- 10 099 059
- US-A- 4 717 723
- US-A1- 2005 175 628
- US-A1- 2007 184 152

## Description

The present invention relates to beverages comprising potassium, and a method for making these.

Many people in western societies suffer from chronically elevated blood pressure (hypertension). Risk factors that play a role in the development of this disorder are for example overweight, salty diet (meaning diets rich in table salt, which is sodium chloride), stress, as well as genetically determined risk factors. The risks that a person runs having high blood pressure are damage of the blood vessel walls, due to higher forces being exerted on these walls. This may lead to atherosclerose (hardening of the arteries), which makes it more difficult for the heart to pump the blood through the vessels, possibly resulting into stroke or heart attack.

In addition to changes in the lifestyle of the person suffering from high blood pressure (like doing more exercise, and higehr consumption of fruit and vegetables), modification of the diet to a potassium rich diet has proven to be helpful to decrease the blood pressure. The American Heart Association for instance advices to include potassium rich foods in the diet, like sweet potatoes, beet greens, potatoes, fat-free yogurt, halibut, tuna, lima beans, bananas, tomato sauce, fat-free milk and orange juice. The recommended daily intake (RDI) of potassium in European countries and the USA is about 3.5 gram per day. However, in general many people do not reach this intake, and therefore have a lack of potassium. Food products can be fortified with potassium sources in order to increase the intake of this important mineral. Well known sources of potassium to fortify foods are potassium chloride, potassium lactate, potassium citrate and other potassium salts. An example of this is the addition of potassium chloride to table salt, with which a mixture of sodium chloride and potassium chloride is obtained, that can be used by the consumer as a condiment for their foods.

In spite of the advantages of the potassium supplementation by fortification of food products to decrease blood pressure, a disadvantage is that potassium may increase bitterness of the food products, due to the inherent bitterness of this mineral. Especially potassium chloride is notorious in this respect. Therefore solutions are required to solve this problem, as bitterness may lead to bad tasting food products, that will not be consumed by the consumer to decrease his or her blood pressure.

One option is to encapsulate the potassium to prevent the contact of the potassium with bitterness receptors on the tongue. A drawback of encapsulation is that a suitable encapsulate should be found that works well in the food product. Furthermore encapsulates are often more expensive than the potassium salt itself. Another way of masking the bad taste of potassium is to add another taste which is stronger than the bitter taste, and therewith reduces the bitter taste. However often the bitter taste, although reduced, remains notable, and generally relatively large quantities of masking taste ingredient should be added to mask the undesired bitter taste. Therefore not much flexibility for taste modification is left for the food product developer. Moreover by adding a masking agent, another strong tastant is incorporated in the food product. Such addition generally cannot be used in food products which desirably have a neutral or bland taste and flavour. Therefore other solutions have been proposed to decrease the bitterness of food products.

WO 95/21542 discloses beverages based on fruit and/or vegetable juice, comprising naturally 4.5 to 5.5 gram potassium per liter, and pectin as a thickener/stabiliser.

US 5,607,714 discloses methods for stabilising proteins in food compositions by galactomannans. A beverage is exemplified comprising about 1-1.7 gram potassium per liter beverage, comprising dairy protein, locust bean gum and fruit juice.

US 2007/0184152 A1 discloses a beverage comprising L-glutamine, caffeine, vitamins, and a potassium salt, selected from potassium chloride and potassium gluconate. The concentration of the potassium salt is about 1%, leading to a concentration of the potassium ion from about 1.7 to 5 gram per liter.

US 2008/0038408 A1 (Kao) discloses a non-tea based beverage with a green tea extract, comprising as pH adjuster 0.01-0.5 wt% of a salt selected from the group consisting of sodium salts and potassium salts of citric acid, gluconic acid, tartaric acid, lactic acid, fumaric acid, malic acid, phosphoric acid, ascorbic acid and other acids. Consequently the maximum potassium concentration (dependent on the used salt) is about 2.5 gram per liter. The beverage is reduced in bitterness.

WO 2004/068957 discloses beverages comprising potassium at a concentration from about 1 milligram to a maximum of 5.5 gram per liter. Various sources of potassium salt are mentioned.

Accordingly it is an object of the present invention to provide a food product containing an amount of potassium which helps to decrease blood pressure, and that does not have the negative taste attributes connected with the presence of potassium, and is especially reduced in bitterness.

We have now found that this object can be achieved by a beverage comprising potassium at a concentration of between 3 and 15 gram potassium per liter and locust bean gum.

Accordingly in a first aspect the present invention provides a beverage comprising potassium at a total concentration between 3 and 15 gram potassium per liter, and locust bean gum at a concentration between 0.2 and 10 gram per liter.

In a second aspect the invention provides a method for the preparation of a beverage according to the invention, comprising the subsequent steps:
a) mixing ingredients in a vessel;
b) filling of containers with the mixture from step a).

### Detailed description

All percentages mentioned herein are by weight calculated on the total composition, unless specified otherwise. The abbreviation 'wt%' is to be understood as % by weight of the total composition.

'Substantially free from' means that the concentration of a compound or ingredient in a composition is so low that the physical and sensory properties of the composition are not influenced by the presence of minute amounts of the compound.

Compositions of the invention are beverages, or liquid food products. For the purpose of the invention liquid food products are fluid products having a relatively low viscosity, which can readily be poured and which can be consumed as a drink. Such products can easily be manufactured, packed and supplied to consumers. Preferred beverages of the invention are packed in closed containers comprising single dose portions of 50 to 350 milliliter, for example from 75 to 125 milliliter. Preferably single dose portions are separately packed in closed containers like bottles, to ensure reliable dosing of ingredients while maintaining optimal freshness of the product.

The beverage according to the invention may preferably be used as a physiologically functional food product. According to a preferred embodiment, the consumption of the food composition by a human subject is effective in reducing blood pressure in the human subject. Preferably the effective amount of potassium is such that it would give a health benefit in a daily serving size of the food product. Suitably 1 to 5 single dose portions are consumed to provide the daily dosage of the potassium. The daily serving size is the amount of a food product typically eaten in a day.

### Potassium

The present invention is especially suited for potassium in an amount needed to obtain a health benefit. High doses are necessary to provide such a health benefit, the so-called effective amount. Preferably, the concentration of potassium is such that about 15 to 50% of the recommended daily intake (RDI) of potassium per serving is supplied, more preferred 20 to 30% of the RDI.

The beverage according to the invention comprises potassium at a total concentration between 3 and 15 gram potassium per liter (based on potassium mineral as such) and locust bean gum at a concentration between 0.2 and 10 gram per liter. Preferred concentrations of potassium in the beverage are from 3 to 12 gram potassium per liter, more preferably 4 to 10 gram potassium per liter, and most preferably from 5 to 8 gram potassium per liter.

The beverage according to the invention preferably provides a total dose of potassium per single serving of 300 to 1500 mg, more preferably 300 to 1200 mg, even more preferably 400 to 1000 mg and most preferably from 500 to 800 mg. It is stressed that these amounts are based on potassium mineral as such.

The source of the potassium in the beverage of the invention may be partly as a natural compound of the ingredients of the beverage, and partly as a potassium salt in order to obtain the required potassium concentration in the beverage. Any source of potassium or combination of potassium salts suitable for use in food products may be used to enrich the beverage, to obtain the required potassium concentration. Examples of potassium salts that can be used to fortify food products with potassium are potassium sorbate, potassium benzoate, potassium acetate, potassium propionate, potassium lactate, monopotassium citrate, tripotassium citrate, monopotassium tartrate and dipotassium tartrate, monopotassium phosphate, dipotassium phosphate, tripotassium phosphate, potassium malate, potassium adipate, potassium alginate, dipotassium diphosphate, tetrapotassium diphosphate, potassium pyrophosphate, tetrapotassium pyrophosphate, pentapotassium triphosphate, pentapotassium tripolyphosphate, potassium triphosphate, potassium tripolyphosphate, potassium metaphosphate, potassium polymetaphosphate, potassium carbonate, potassium hydrogen carbonate, potassium chloride, potassium gluconate, monopotassium glutamate, and potassium-L-hydrogen aspartate. Combinations of these and other suitable potassium salts may also be used to fortify food products. Preferably the beverage according to the invention comprises a potassium salt that is selected from the group of potassium gluconate, potassium lactate, monopotassium citrate, tripotassium citrate, and combinations thereof. More preferred the beverage according the invention comprises potassium gluconate. Potassium gluconate is the potassium salt of gluconic acid, which is obtained from glucose by fermentation and subsequent neutralisation with a potassium source.

The amount of potassium required depends on the amount needed for an effect to be obtained, the potassium concentration naturally present in the ingredients of the beverage, and on the quantity of a serving size, and can be determined by the skilled person. Furthermore the amount of potassium salt depends on the type of potassium salt as it is the amount of potassium ion which is the determining factor for establishing the daily recommended amount. Depending on the counter-ion the amount of potassium salt to be used will vary for various potassium salts. The level of potassium of a few potassium salts is given in the following table.

| *potassium salt* | *molecular formula* | *molecular weight* | *potassium level* (*% by weight*) |
|---|---|---|---|
| potassium lactate | C₃H₅O₃K | 128.1 | 17.8% |
| potassium bicarbonate | KHC0₃ | 100.1 | 39.1% |
| potassium carbonate | K₂CO₃ | 138.2 | 56.6% |
| potassium chloride | KCl | 74.55 | 52.4% |
| tri-potassium citrate monohydrate | C₆H₅O₇K₃.H₂O | 324.24 | 36.2% |
| potassium gluconate (D-gluconic acid potassium salt) | C₆H₁₁O₇K | 234.3 | 16.7% |
| monopotassium phosphate | KH₂PO₄ | 136.1 | 28.7% |
| dipotassium phosphate | K₂HPO₄ | 174.2 | 44.9% |
| tripotassium phosphate | K₃PO₄ | 212.3 | 55.3% |
| potassium-L-hydrogen aspartate | C₄H₆NO₄K. 0.5H₂O | 180.2 | 21.7% |

Flavour is the sensory impression of a food or other substance, and is determined mainly by the chemical senses of taste and smell. Potassium salts are known to give a bitter, metallic taste and/or flavour when present in substantial amounts. The taste and/or flavour of the beverage may be determined by a sensory panel. The taste or flavour of an ingredient is dependent on the concentration of the ingredient. Therefore the present invention relates to a beverage comprising potassium in an amount that gives an undesired flavour in the beverage without locust bean gum. The beverage with potassium salt is tested by a sensory panel that evaluates the flavour of the beverages with and without locust bean gum.

Sensory panels consist of trained human assessors that qualify and quantify sensory properties of foods. The responses made by the sensory panels are recorded and may be analysed by statistical methods e.g. ANOVA, multivariate or univariate data analyses. Within food research, sensory panels are commonly used to qualify and quantify sensory properties, such as taste, odour or smell, flavour, mouthfeel, and other organoleptic properties. The type of sensory panel will depend on the taste of the product and the product format, however these consideration are all within the skills of a skilled person.

### Fruit components

Preferably, the beverages of the invention comprise at least 10% by weight of the composition of a fruit component, wherein the fruit component is selected from fruit juice, fruit concentrate, fruit juice concentrate, fruit puree, fruit pulp, comminuted fruit, fruit puree concentrate, and combinations thereof. Examples of such fruit components are orange juice, apple juice, grape juice, peach pulp, banana pulp, apricot pulp, concentrated orange juice, mango pulp, concentrated peach juice, raspberry puree, strawberry puree, apple pulp, raspberry pulp, concentrated grape juice, concentrated aronia juice, concentrated elderberry juice. Preferably the beverage of the invention comprises at least 30% by weight of the beverage of said fruit component, more preferred at least 40% by weight of the beverage of said fruit component. These amounts are calculated as if undiluted, non-concentrated fruit juices and purees and the like are used. Thus, if 0.5% by weight of a 6-fold fruit concentrate is used, the actual amount of fruit component incorporated is 3% by weight of the beverage. Any commonly available fruit component might be used in the beverages according to the invention, and may be selected from one or more of the following fruit sources: citrus fruit (e.g. orange, tangerine, lemon or grapefruit); tropical fruit (e.g. banana, peach, mango, apricot or passion fruit); red fruit (e.g. strawberry, cherry, raspberry or blackberry), or any combination thereof.

The fruit components may contain potassium mineral as a naturally present compound. Typical levels of potassium of some fruit juices and purees are given in the following table. These values are just examples and may vary from harvest to harvest and source to source, are not meant to be limiting for the present invention in any way.

| *fruit component* | *potassium level [mg*/*kg]* | *fruit component* | *potassium level [mglkg]* |
|---|---|---|---|
| acerola juice | 1020 | lemon juice | 1300-1400 |
| acerola puree | 1020 | orange juice | 1500-1800 |
| apple juice | 1100-1400 | passionfruit juice | 3118 |
| apricot juice | 2673 | peach juice | 2020 |
| banana juice | 3210 | pear juice | 1180 |
| black currant nectar | 980 | pineapple juice | 1200-1400 |
| blueberry juice | 816 | raspberry juice | 1400-2000 |
| cherry morello juice | 2010 | raspberry puree | 2050 |
| elderberry juice | 2880 | red currant nectar | 1100 |
| granadilla juice | 2150 | sea buckthorn juice | 2090 |
| grape juice | 600-1500 | strawberry juice | 1403 |
| grapefruit juice | 1000-1500 | tomato juice | 2300 |

The fruit components may comprise natural thickeners and/or gelling agents like pectin. Typically, the level of thickeners is from 0.01 to 3 wt% based on the weight of the fruit composition. This is not meant to be limiting for the present invention.

In other preferred embodiments, the compositions according to the invention comprise one or more vegetable components like vegetable juices or purees. Examples are carrot juice, tomato juice, rhubarb, black carrot, and pumpkin. Also these vegetable components may contain potassium as a naturally present mineral. As a typical non-limiting example tomato juice contains about 2300 mg potassium per kg juice.

### Thickener system

The beverages of the invention comprise comprise potassium at a total concentration between 3 and 15 gram potassium per liter and locust bean gum at a concentration between 0.2 and 10 gram per liter, preferably the locust bean gum is present at a concentration between 0.2 and 5 gram per liter. Additionally other thickeners may be added to the beverage of the invention, wherein the thickener may be any known thickener and is preferably selected from the group comprising gums, like xanthan, guar, and carrageenan, polysaccharides, alginate, pectin, starch, modified starch and gelatin. If present in addition to locust bean gum, the concentration of a thickener depends on factors as stability and application and can be determined by the skilled person.

Without wishing to be limited by theory, the presence of locust bean gum is considered to be effective to reduce the bitter taste of potassium in the beverage of the invention.

Preferably the locust bean gum as used in the beverages of the present invention is a pure locust bean gum derived from the endosperm of the seed of carob tree. Usually it is an off-white powder containing only few specks.

### Other ingredients

Preferably a beverage according to the invention comprises dairy protein and soy protein at a maximum total concentration of 1% by weight of the beverage. Mostly preferred the beverages of the invention are substantially free from dairy protein and soy protein. For the purpose of the invention this means that the amount of protein from dairy or soy sources is preferably less than 1% by weight of the beverage, more preferred less than 0.5% by weight, especially 0.1% by weight or lower. Traces of proteins could be present in the beverage, for example as part of any of the ingredients added.

Similarly the beverages according to the invention comprise dietary fat at a maximum total concentration of 1 % by weight of the beverage. Mostly preferred the beverages of the invention are substantially free from dietary fat. In the context of the present invention dietary fats are to be understood as triglycerides which are commonly part of the human diet. For the purpose of the invention this means that the amount of dietary fats is preferably less than 1 wt%, more preferred less than 0.5 wt%, especially 0.1 wt% or lower. Traces of dietary fat may be present in the beverage, for example as part of any of the ingredients added.

In addition to the ingredients mentioned before, the beverage according to the invention may comprise common food ingredients like water, sugar, and high-intensity sweeteners in appropriate amounts. They may further be supplemented with various other optional ingredients, for example flavouring ingredients, antioxidants, thickeners, emulsifiers, and colouring agents. Also possible is the addition of further beneficial agents such as dietary fibres, prebiotics, (phyto-)sterols, (phyto-)stanols, peptides, fortificants such as vitamins and minerals and probiotics or combinations thereof. Especially vitamins like vitamins A, B6, B12, C, and E, and minerals like calcium, magnesium, iron, are suitably comprised by the beverage according to the invention. The levels of these ingredients may vary in a broad range, for example for each of these ingredients up to 10% by weight.

### Preferred embodiments of the beverages according to the invention:

The beverages according to the invention comprise potassium at a total concentration between 3 and 15 gram potassium per liter, and locust bean gum at a concentration between 0.2 and 10 gram per liter.
Preferably the beverages according to the invention comprise:
■ preferred concentrations of potassium in the beverage according to the invention are from 3 to 12 gram potassium per liter, more preferably 4 to 10 gram potassium per liter, and most preferably from 5 to 8 gram potassium per liter; and/or
■ preferably the locust bean gum is present at a concentration between 0.2 and 5 gram per liter; and/or
■ preferably the beverage according to the invention comprises a potassium salt that is selected from the group of potassium gluconate, potassium lactate, monopotassium citrate, tripotassium citrate, and combinations thereof; more preferred the beverage according the invention comprises potassium gluconate; and/or
■ preferably, the beverages of the invention comprise at least 10% by weight of the composition of a fruit component, wherein the fruit component is selected from fruit juice, fruit concentrate, fruit juice concentrate, fruit puree, fruit pulp, comminuted fruit, fruit puree concentrate, and combinations thereof; more preferred the beverages of the invention comprise at least 30% by weight of the beverage of said fruit component, more preferred at least 40% by weight of the beverage of said fruit component; and/or
■ preferably a beverage according to the invention comprises dairy protein and soy protein at a maximum total concentration of 1% by weight of the beverage; more preferred said concentration is less than 0.5% by weight, mostly preferred less than 0.1 % by weight or lower; and/or
■ preferably a beverage according to the invention comprises dietary fat at a maximum total concentration of 1 % by weight of the beverage; more preferred said concentration is less than 0.5% by weight, mostly preferred less than 0.1% by weight or lower; and/or
■ preferably the pH of the beverages according to the invention is between 3 and 5, more preferred between 3.5 and 4.5, and mostly preferred between 4 and 4.5.

### Production of the beverages

The beverages of the invention may be produced by any suitable method. In a second aspect the invention provides a method for the preparation of a beverage according to the invention, comprising the subsequent steps:
a) mixing ingredients in a vessel;
b) filling of containers with the mixture from step a).

Preferably the mixture obtained in step a) is pasteurised prior to filling of containers.

If the beverage according to the invention comprises fruit component, then preferably the fruit component is added in fluid form e.g. as a juice or a puree having a viscosity expressed in Brookfield viscosimeter values of between 200 and 700 mPa.s at 10-20°C.

The mixing of the ingredients of the beverage may be carried out by any suitable method, in a suitable vessel, using a suitable mixing device, creating a premix of ingredients in water. Preferably the premix is pasteurised at a temperature of above 60°C, preferably 65-100°C, more preferably 70-80°C, most preferably 75-80°C. If carried out, preferably the duration of a pasteurisation heat treatment is from 1 second to 10 minutes, for example from 1 to 6 minutes. Usually pasteurisation is carried out in order to obtain microbiologically stable products. The term 'microbiologically stable product' refers to a product that can be stored for at least 20 days under refrigerated conditions without developing unacceptable growth of undesirable, notably pathogenic micro-organisms. In order to obtain microbiologically stable products the pH of the beverage according to the invention is preferably between 3 and 5, more preferably between 3.5 and 4.5, and mostly preferred between 4 and 4.5.

The premix may be homogenised, in order to create a homogeneous blend of ingredients. Preferably homogenisation takes place in a homogeniser operating at, for example, a pressure of at least 20 bar, preferably 30-500 bar, particularly 40-300 bar. The homogenisation may be carried out at room temperature or at elevated temperatures, and may be carried out prior or after a possible pasteurisation step.

The beverage obtained by the method of the present invention is usually hot or cold filled into containers, closed by a cap or a seal, and allowed to cool down (if hot filled and stored at chill temperatures. Usually the containers have been desinfected prior to filling them with the pasteurised beverage.

### EXAMPLES

The following non-limiting examples further illustrate the present invention.

The compositions as indicated in the following tables were produced, and a sensory evaluation was carried out. In all cases the total potassium concentration of the beverages was 6 gram potassium per liter (based on total potassium ion). The sensory evaluation involved blind tasting of the beverages by 7 persons.

The compositions were made in the following way. A solution in water was made of locust bean gum, acesulfame-K, sucrose and potassium gluconate, at room temperature. This solution was added to a blend of the fruit components and mixed. This blend was homogenized at 140 bar at room temperature, followed by the addition of water and the other ingredients. The blend was mixed and pH was adjusted with citric acid. Subsequently a pasteurisation step at 85°C was carried out, and the pasteurised liquid was hot filled into bottles, followed by sealing the bottles with an aluminium cap, and cooling.

| | **Beverage A** (according to the invention) | **Beverage B** (according to the invention) | **Beverage C** (comparative) |
|---|---|---|---|
| **ingredient** | **concentration (% by weight)** | **concentration (% by weight)** | **concentration (% by weight)** |
| banana pulp (21 brix) | 16.7 | 16.7 | 16.7 |
| apple pulp (13 brix) | 7.7 | 7.7 | 7.7 |
| raspberry pulp (8 brix) | 6.9 | 6.9 | 6.9 |
| concentrated grape juice (65 brix) | 2.1 | 2.1 | 2.1 |
| concentrated aronia juice (65 brix) | 0.9 | 0.9 | 0.9 |
| concentrated elderberry juice (65 brix) | 0.5 | 0.5 | 0.5 |
| potassium gluconate | 3 | 3 | 3 |
| acidifier citric acid | 0.4 | 0.4 | 0.4 |
| natural flavour | 0.05 | 0.05 | 0.05 |
| locust bean gum | 0.053 | 0.061 | |
| pectin | | | 0.4 |
| acesulfame-K | 0.03 | 0.03 | 0.03 |
| sucrose | 0.72 | 0.72 | 0.72 |
| vitamin C | 0.03 | 0.03 | 0.03 |
| water | 60.9 | 60.9 | 60.6 |
| pH | 4.3 | 4.3 | 4.3 |
| **Sensory evaluation** | | | |
| mouthfeel | good | good | good |
| thickness | good | rather thick | good |
| bitterness | no | no | bitter aftertaste |

| | **Beverage D** (according to the invention) | **Beverage E** (according to the invention) | **Beverage F** (comparative) |
|---|---|---|---|
| **ingredient** | **concentration (% by weight)** | **concentration (% by weight)** | **concentration (% by weight)** |
| peach pulp (10 brix) | 12.7 | 12.7 | 12.7 |
| banana pulp (21 brix) | 12.5 | 12.5 | 12.5 |
| apricot pulp (12 brix) | 11.5 | 11.5 | 11.5 |
| concentrated mango pulp (29 brix) | 1.1 | 1.1 | 1.1 |
| concentrated orange juice (66 Brix) | 1.3 | 1.3 | 1.3 |
| concentrated peach juice (65 brix) | 0.5 | 0.5 | 0.5 |
| potassium gluconate | 2.8 | 2.8 | 2.8 |
| acidifier citric acid | 0.1 | 0.1 | 0.1 |
| natural flavour | 0.1 | 0.1 | 0.1 |
| locust bean gum | 0.096 | 0.12 | |
| pectin | | | 0.6 |
| acesulfame-K | 0.04 | 0.04 | 0.04 |
| sucrose | 0.7 | 0.7 | 0.7 |
| vitamin C | 0.03 | 0.03 | 0.03 |
| beta-carotene | 0.1 | 0.1 | 0.1 |
| water | 56.5 | 56.5 | 56.0 |
| pH | 4.3 | 4.3 | 4.3 |
| **Sensory evaluation** | | | |
| mouthfeel | good | good | good |
| thickness | good | rather thick | good |
| bitterness | no | no | bitter aftertaste |

The ingredients as used in these compositions are characterised by.
■ locust bean gum: Grindsted ex Danisco (Danisco);
■ pectin: apple pectin low viscosity, ex Emig (Germany);
■ vitamin C: pure ascorbic acid, crystalline white powder, ex Oskar Berg GmbH, Duisburg (Germany);
■ beta-carotene: o/w emulsion of vegetable oil (medium chain triglycerides) in water;
■ potassium gluconate: white yellowish crystalline powder or granules, ex Jungbunzlauer, Ladenburg (Germany);
■ acesulfame K: white powder, ex Zhangjiagang Hope Chemicals Co., Ltd., Nansha Town, China;
■ citric acid: clear solution of citric acid anhydrite in water

From these examples can be concluded that the persons tasting the beverages comprising a combination of potassium and locust bean gum did not observe a bitter taste, while comparative beverages comprising potassium and pectin had a bitter aftertaste.

## Claims

1. A beverage comprising potassium at a total concentration between 3 and 15 gram potassium per liter, and locust bean gum at a concentration between 0.2 and 10 gram per liter.

2. A beverage according to claim 1, comprising a potassium salt that is selected from the group of potassium gluconate, potassium lactate, monopotassium citrate, tripotassium citrate, and combinations thereof.

3. A beverage according to claim 2, wherein the potassium salt comprises potassium gluconate.

4. A beverage according to any of claims 1 to 3, further comprising at least 10% by weight of a fruit component selected from fruit juice, fruit concentrate, fruit juice concentrate, fruit puree, fruit pulp, comminuted fruit, fruit puree concentrate, and combinations thereof.

5. A beverage according to any of claims 1 to 4, having a pH between 3 and 5.

6. A beverage according to any of claims 1 to 5, wherein the maximum total concentration of dairy protein and soy protein is 1% by weight of the beverage.

7. A beverage according to any of claims 1 to 6, wherein the maximum total concentration of dietary fat is 1% by weight of the beverage.

8. A method for the preparation of a beverage according to any of claims 1 to 7, comprising the subsequent steps:
a) mixing ingredients in a vessel;
b) filling of containers with the mixture from step a).

## Patentansprüche

1. Getränk, das Kalium in einer Gesamtkonzentration von zwischen 3 und 15 Gramm Kalium pro Liter und Johannisbrotkerngummi mit einer Konzentration von zwischen 0,2 und 10 Gramm pro Liter umfasst.

2. Getränk gemäß Anspruch 1, das ein Kaliumsalz umfasst, das aus der Gruppe von Kaliumgluconat, Kaliumlactat, Monokaliumcitrat, Trikaliumcitrat und Kombinationen davon ausgewählt ist.

3. Getränk gemäß Anspruch 2, wobei das Kaliumsalz Kaliumgluconat umfasst.

4. Getränk gemäß einem der Ansprüche 1 bis 3, das außerdem wenigstens 10 Gew.-% einer Fruchtkomponente, ausgewählt aus Fruchtsaft, Fruchtkonzentrat, Fruchtsaftkonzentrat, Fruchtpüree, Fruchtpulpe, zerkleinerter Frucht, Fruchtpüreekonzentrat und Kombinationen davon, umfasst.

5. Getränk gemäß einem der Ansprüche 1 bis 4, das einen pH von zwischen 3 und 5 hat.

6. Getränk gemäß einem der Ansprüche 1 bis 5, wobei die maximale Gesamtkonzentration an Milchprotein und Sojaprotein 1 Gew.-% des Getränks ist.

7. Getränk gemäß einem der Ansprüche 1 bis 6, wobei die maximale Konzentration an Nahrungsmittelfett 1 Gew.-% des Getränks ist.

8. Verfahren zur Herstellung eines Getränks gemäß einem der Ansprüche 1 bis 7, umfassend die aufeinanderfolgenden Schritte:
a) Mischen von Ingredientien in einem Gefäß;
b) Befüllen von Behältern mit dem Gemisch aus Schritt a).

## Revendications

1. Boisson comprenant du potassium à une concentration totale entre 3 et 15 grammes de potassium par litre, et de la gomme de caroube à une concentration entre 0,2 et 10 grammes par litre.

2. Boisson selon la revendication 1, comprenant un sel de potassium qui est choisi dans le groupe du gluconate de potassium, du lactate de potassium, du citrate monopotassique, du citrate tripotassique, et de leurs combinaisons.

3. Boisson selon la revendication 2, dans laquelle le sel de potassium comprend le gluconate de potassium.

4. Boisson selon l'une quelconque des revendications 1 à 3 comprenant, en outre, au moins 10 % en poids d'un composant de fruit choisi parmi le jus de fruits, le concentré de fruits, le concentré de jus de fruits, la purée de fruits, la pulpe de fruits, les fruits hachés menus, le concentré de purée de fruits, et leurs combinaisons.

5. Boisson selon l'une quelconque des revendications 1 à 4, ayant un pH entre 3 et 5.

6. Boisson selon l'une quelconque des revendications 1 à 5, dans laquelle la concentration totale maximale de protéine laitière et de protéine de soja est de 1 % en poids de la boisson.

7. Boisson selon l'une quelconque des revendications 1 à 6, dans laquelle la concentration totale maximale de graisses alimentaires est de 1 % en poids de la boisson.

8. Procédé de préparation d'une boisson selon l'une quelconque des revendications 1 à 7, comprenant les étapes successives :
a) mixage des ingrédients dans un réacteur ;
b) remplissage des récipients avec le mélange obtenu à l'étape a).
